# FASCICULE DE BREVET EUROPEEN

(11) **EP 3 853 784 B1**
(45) Date de publication et mention de la délivrance du brevet: **14.05.2025**
(21) Numéro de dépôt: 19768853.4
(22) Date de dépôt: 18.09.2019
(51) Int. Cl.: G06Q 10/20, G06Q 50/40, G06Q 10/04

(54) **PROCÉDÉ D'ANALYSE DES DYSFONCTIONNEMENTS D'UN SYSTÈME ET DISPOSITIFS ASSOCIÉS**
VERFAHREN ZUR ANALYSE VON FEHLFUNKTIONEN EINES SYSTEMS UND ZUGEHÖRIGE VORRICHTUNGEN
METHOD FOR ANALYSING MALFUNCTIONS OF A SYSTEM AND ASSOCIATED DEVICES

(30) Priorité: 18.09.2018 FR 1800983
(43) Date de publication de la demande: 28.07.2021
(73) Titulaire: Hitachi Rail GTS France SAS, 78140 Velizy-Villacoublay (FR)
(72) Inventeur: KRAIT, Philippe, SINGAPORE 498788 (SG); BIENVENU, Kevin, 75009 PARIS (FR); MADEC, Florent, 75013 PARIS (FR)
(74) Mandataire: Lavoix
(86) Numéro de dépôt international: PCT/EP2019/075020
(87) Numéro de publication internationale: WO 2020/058343

(56) Documents cités:
- FR-A1- 2 828 945
- FR-A1- 2 938 676
- FR-A1- 2 989 499
- FR-B1- 2 828 945
- US-A- 5 557 549
- US-A1- 2016 253 563
- US-A1- 2016 370 798
- US-B2- 9 407 861

## Description

La présente invention concerne un procédé d'analyse des dysfonctionnements d'un système. L'invention se rapporte également à un produit programme d'ordinateur, un support lisible d'informations et une plateforme informatique en nuage associés.

Dans le domaine des transports, certains systèmes, comme les trains, sont difficiles à maintenir dans la mesure où il est impossible d'arrêter le trafic en dehors de plages horaires réduites. A cette difficulté s'ajoute pour un agent de maintenance la complexité de l'ensemble d'équipements formant le train, ce qui résulter en une détermination délicate de la panne ou de l'action correctrice à effectuer.

Pour cela, il est connu de disposer de documentations indiquant les démarches à suivre dans certains cas bien spécifiques. Cette documentation est, par exemple, disponible sous format papier ou sous forme électronique après numérisation de la documentation.

Toutefois, en pratique, la panne rencontrée est souvent différente des éléments présents dans les documentations de sorte que l'agent de maintenance se trouve démuni pour trouver l'action correctrice adaptée.

Le document US2016/370798A1 fait partie de l'état de l'art pour les procédés d'analyse des dysfonctionnement d'un système.

Il existe donc un besoin pour un procédé d'analyse des dysfonctionnements d'un système comportant une pluralité d'éléments qui soit de mise en œuvre plus aisée.

Pour cela, la présente description propose un procédé d'analyse des dysfonctionnements d'un système, le procédé comportant une phase d'initialisation une et une phase d'exploitation. La phase d'initialisation comprend une étape de réception d'informations relatives à la maintenance du système, pour former une base de données, et d'obtention d'arbres de décision à partir d'au moins une partie des informations de la base de données reçue, un arbre de décision définissant un ensemble de suites d'opérations de maintenance à réaliser pour effectuer la maintenance du système. La phase d'exploitation comporte une étape de mise à disposition d'un agent de maintenance de l'ensemble des arbres de décisions ainsi que de la base de données, de réalisation par l'agent de maintenance d'une suite d'opérations de maintenance sur le système en fonction d'au moins une partie des arbres de décisions, d'envoi d'au moins une information relative à la suite d'opérations de maintenance réalisées, d'actualisation de la base de données à l'aide de l'au moins une information envoyée, de sélection des arbres de décisions comportant au moins une opération de maintenance commune avec la suite d'opérations effectuée par l'agent de maintenance, pour obtenir des arbres de décision sélectionnés, d'extraction des informations relatives aux arbres de décision sélectionnés dans la base de données et de mise à jour de l'ensemble des arbres de décision sélectionnés par application d'une technique d'apprentissage appliquée sur l'ensemble des informations extraites, la mise à jour étant effectuée par une unité de traitement de données d'une plateforme informatique. La phase d'exploitation est réitérée pour une pluralité de suites d'opérations de maintenance.

Suivant des modes de réalisation particuliers, le procédé d'analyse comprend une ou plusieurs des caractéristiques suivantes, prise(s) isolément ou suivant toutes les combinaisons techniquement possibles :
- la phase d'exploitation comporte, en outre, une étape de demande par l'agent de maintenance d'informations qui se rapportent à des arbres de décisions comportant au moins une opération de maintenance commune avec la suite d'opérations de maintenance à effectuer, et restitution des informations demandées à l'agent de maintenance sur un terminal mobile.
- les informations restituées lors de l'étape de restitution sont des informations qui sont contenues dans la base de données et qui comportent au moins un élément choisi dans la liste constitué d'une image, d'une vidéo ou d'un commentaire provenant d'au moins un agent de maintenance ayant effectué la même suite d'opérations de maintenance.
- les informations restituées lors de l'étape de restitution comportent l'affichage sur le terminal mobile d'une suite d'opérations de maintenance à effectuer en réalité virtuelle.
- les informations restituées lors de l'étape de restitution sont restituées à l'aide d'une technique de réalité augmentée.
- la technique d'apprentissage est une étude statistique.
- l'étape d'actualisation comporte un traitement par un superviseur des informations envoyées pour obtenir des informations traitées et un ajout des informations traitées à la base de données.

La présente description décrit également un produit programme d'ordinateur comportant un support lisible d'informations, sur lequel est mémorisé un programme d'ordinateur comprenant des instructions de programme, le programme d'ordinateur étant chargeable sur une unité de traitement de données et adapté pour entraîner la mise en œuvre d'au moins l'étape de mise à jour du procédé tel que précédemment décrit lorsque le programme d'ordinateur est mis en œuvre sur l'unité de traitement des données.

La présente description propose, en outre, un support lisible d'informations sur lequel est mémorisé un produit programme d'ordinateur tel que précédemment décrit.

La présente description décrit également une plateforme informatique (10) propre à mettre en œuvre certaines étapes du procédé tel que précédemment décrit, la plateforme comportant un ensemble de terminaux mobiles, les terminaux mobiles étant utilisés lors de l'étape d'envoi du procédé, et une unité de traitement de données adaptée pour entraîner la mise en œuvre d'au moins l'étape de mise à jour du procédé lorsqu'est mis en œuvre sur l'unité de traitement des données un programme d'ordinateur chargé sur l'unité de traitement de données et comprenant des instructions de programme mémorisées sur un support lisible d'informations d'un produit programme d'ordinateur, la plateforme informatique étant une plateforme en nuage.

D'autres caractéristiques et avantages de l'invention apparaîtront à la lecture de la description qui suit de modes de réalisation de l'invention, donnés à titre d'exemple uniquement et en référence aux dessins qui sont :
- figure 1, une vue schématique d'un exemple de plateforme informatique en interaction avec ses utilisateurs, et
- figure 2, une vue schématique d'un exemple de poste central faisant partie d'une plateforme informatique, et
- figure 3, une vue schématique d'un ensemble d'installations dans laquelle le système est amené à être utilisé.

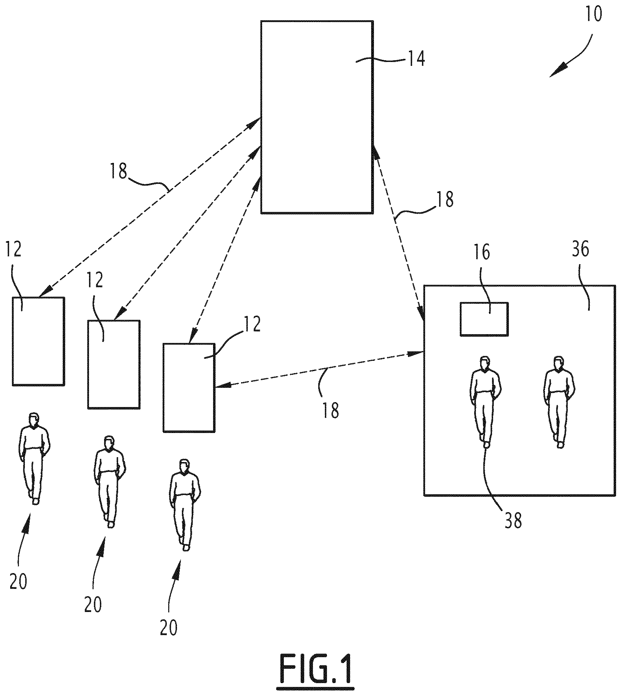

Une plateforme informatique 10 est représentée sur la figure 1.

La plateforme 10 est une plateforme en nuage.

L'expression « en nuage » renvoie au terme anglais de « cloud » et se rapporte à l'exploitation à la fois des capacités de stockage de serveurs informatiques distants par l'intermédiaire d'un réseau de communications, typiquement par internet et des capacités d'exécution de programmes informatiques.

Une telle notion est parfois exprimée sous le terme de « distribué » dans la littérature.

La plateforme 10 est propre à mettre en œuvre des étapes d'un procédé d'analyse des dysfonctionnements d'un système.

En l'espèce, la plateforme 10 comporte des terminaux mobiles 12, un serveur 14 et un poste central 16.

Les terminaux mobiles 12, le serveur 14 et le poste central 16 sont propres à interagir via un réseau de communications. Ces interactions sont visibles sur la figure 1 sous la forme de flèches en pointillés dont le signe de référence est 18.

Chaque terminal mobile 12 est une tablette.

Chaque terminal mobile 12 est, dans l'exemple représenté, propre à un agent de maintenance 20, un agent de maintenance 20 étant un opérateur chargé de l'entretien et de la maintenance d'un système.

Chaque terminal mobile 12 sert d'interface homme-machine à l'agent de maintenance 20, lui permettant d'interagir avec le réseau et ses éléments.

Le serveur 14 est un serveur informatique permettant d'offrir des services aux opérateurs du réseau. Le serveur 14 fonctionne en permanence, répondant automatiquement à des requêtes provenant des terminaux mobiles 12 ou du poste central 16 selon le principe dit client-serveur.

Comme cela sera détaillé ultérieurement, le serveur 14 sert notamment à stocker la base de données obtenue avec le procédé.

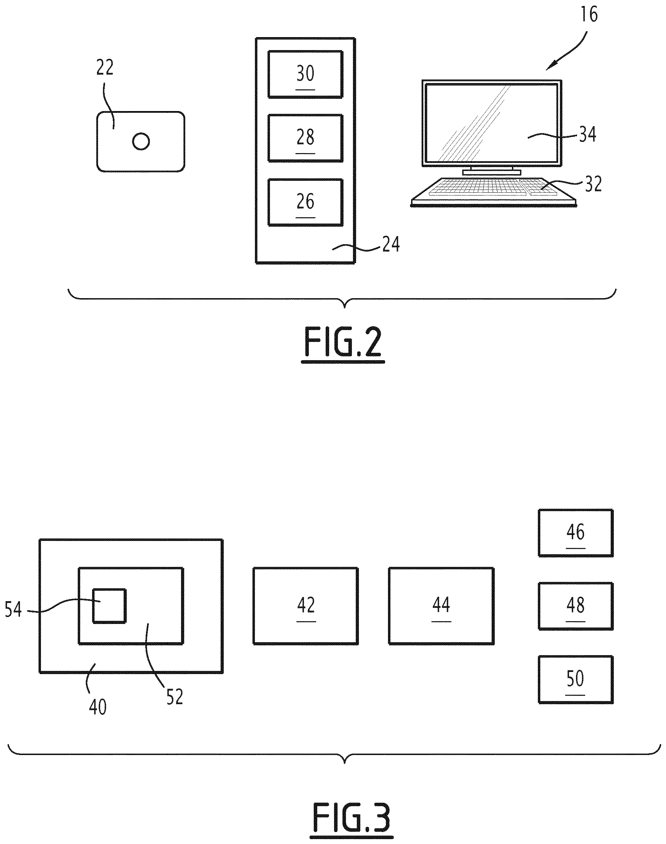

Le poste central 16 est un ordinateur représenté notamment à la figure 2.

Aussi, le poste central 16 et un produit programme d'ordinateur 22 sont représentés à la figure 2. L'interaction du produit programme d'ordinateur 22 avec le poste central 16 permet de mettre en œuvre un procédé d'analyse des dysfonctionnements d'un système.

Plus généralement, le poste central 16 est un calculateur électronique propre à manipuler et/ou transformer des données représentées comme des quantités électroniques ou physiques dans des registres du calculateur et/ou des mémoires en d'autres données similaires correspondant à des données physiques dans des mémoires, des registres ou d'autres types de dispositifs d'affichage, de transmission ou de mémorisation.

Le poste central 16 comporte un processeur 24 comprenant une unité de traitement de données 26, des mémoires 28 et un lecteur 30 de support d'informations. Le poste central 16 comprend également un clavier 32 et une unité d'affichage 34.

Le produit programme d'ordinateur 22 comporte un support lisible d'informations.

Un support lisible d'informations est un support lisible par le poste central 16, usuellement par le lecteur 30. Le support lisible d'informations est un médium adapté à mémoriser des instructions électroniques et capable d'être couplé à un bus d'un système informatique.

A titre d'exemple, le support lisible d'informations est une disquette ou disque souple (de la dénomination anglaise de *« floppy disk »),* un disque optique, un CD-ROM, un disque magnéto-optique, une mémoire ROM, une mémoire RAM, une mémoire EPROM, une mémoire EEPROM, une carte magnétique ou une carte optique.

Sur le support lisible d'informations est mémorisé un programme d'ordinateur comprenant des instructions de programme.

Le programme d'ordinateur est chargeable sur l'unité de traitement de données 26 et est adapté pour entraîner la mise en œuvre du procédé d'analyse.

Pour la suite, il est supposé que le poste central 16 fait partie d'une centrale de supervision 36, la centrale de supervision 36 comportant également des superviseurs 38.

Dans l'exemple proposé, les superviseurs 38 sont des experts 38 humains.

En variante, il pourrait être envisagé de remplacer les experts 38 par des superviseurs informatiques 38.

Le fonctionnement de la plateforme 10 est maintenant décrit en référence à un exemple de mise en œuvre d'un procédé d'analyse des dysfonctionnements d'un système.

Le procédé d'analyse s'applique dans un cas où le système est amené au cours de sa vie à être utilisé dans plusieurs installations distinctes. Un tel ensemble d'installations est représenté sur la figure 3.

Dans l'exemple représenté, les installations sont une gare 40, un centre de maintenance 42, un centre de réparation 44 et trois centrales 46, 48 et 50 appartenant chacune à un fournisseur respectif du centre de réparation 44.

L'ensemble des installations est ainsi un ensemble de maintenance et d'exploitation de train 52.

Chaque train 52 comporte une pluralité d'équipements 54 comportant chacun une pluralité de pièces.

Les équipements 54 sont, dans ce qui suit, des équipements de train.

Un ventilateur, un moteur ou des roues sont des exemples de tels équipements 56.

Dans la gare 40, une pluralité de trains 54 est propre à partir et à arriver.

La gare 40 comporte notamment des capteurs propres à mesurer les conditions environnementales. Par exemple, les capteurs sont propres à mesurer la température de la piste, la quantité de pluie ou encore la visibilité.

Chaque train 54, et notamment chaque équipement 56 du train 54, fait l'objet d'un contrôle strict dans le centre de maintenance 42.

Chaque équipement 56 est testé par une pluralité de capteurs.

La pluralité de capteurs donne ainsi accès, à titre d'illustration, à la résistance mécanique de l'équipement 56 ou à des valeurs électriques de référence de l'équipement 56.

Lorsqu'un équipement 56 présente un dysfonctionnement, l'équipement 56 est envoyé à un centre de réparation 26. Par l'expression « dysfonctionnement », il est entendu aussi bien une panne, soit une absence de fonctionnement, qu'un fonctionnement non conforme au fonctionnement attendu de l'équipement 36.

En ce sens, le procédé permet de favoriser la maintenance aussi bien en préventif qu'en correctif.

Dans le centre de réparation 44, chaque pièce est testée pour trouver l'origine du dysfonctionnement.

En particulier, le test comporte l'établissement par des capteurs de la réponse électrique de l'équipement 56, réponse qui comporte l'ensemble des valeurs électriques et pas seulement les valeurs électriques de référence.

A titre d'exemple, il est supposé que trois pièces d'un équipement 56 sont considérées comme défectueuses et que chacune de ces pièces est fournie par un fournisseur différent.

Chaque pièce est alors renvoyée à la centrale 46, 48 ou 50 du fournisseur concerné pour réparation ou remplacement.

Dans chacune des centrales 46, 48 et 50, le fournisseur procède à de nouveaux tests d'une des pièces de l'équipement 36 avec des capteurs qui lui sont propres.

Dans un tel cas de figure, il apparaît clairement que l'information relative au dysfonctionnement est partagée entre plusieurs installations distinctes.

En l'occurrence, le centre de maintenance 42, le centre de réparation 44 et les centrales 46, 48 et 50 des trois fournisseurs ont chacun à leur disposition des données pertinentes pour la maintenance et la réparation de l'équipement 56 du train 54.

En outre, il est à noter que le cas simple illustré est, dans la plupart des cas plus complexe, du fait que le nombre d'installations est plus grand et qu'il convient également de considérer cette problématique pour chaque équipement 56 et chaque train 54. En particulier, une panne d'un ensemble d'équipement 56 peut être due à la faiblesse d'une seule pièce d'un équipement 56 ou relative seulement à un type de trains 54 particuliers.

Le procédé d'analyse des dysfonctionnements d'un équipement 56 vise à exploiter l'ensemble de ces données pour assurer une meilleure maintenance (prévention) et une meilleure réparation des dysfonctionnements.

Le procédé d'analyse comporte une phase d'initialisation et une phase d'exploitation.

Selon l'exemple décrit, la phase d'initialisation comprend une étape de réception et d'obtention.

Lors de l'étape de réception, des informations relatives à la maintenance du système sont reçues pour former une base de données.

La réception peut se faire par fourniture des documentations existantes, que ce soit sous format papier ou sous format informatique.

Par exemple, dans le cas proposé, il est supposé que le centre de maintenance 42 fournisse toutes les informations dont le centre de maintenance 42 dispose, ces informations étant contenues dans des documentations papier.

Dans un tel cas, le contenu des documentations est numérisé pour former la base de données.

Selon un autre mode de réalisation, la base de données regroupe plusieurs sources d'informations.

Par exemple, selon l'exemple décrit, les informations sont l'ensemble des informations provenant du centre de maintenance 42, du centre de réparation 44 et des trois centrales 46, 48 et 50 appartenant chacune à un fournisseur respectif du centre de réparation 44.

Cela permet d'obtenir une base de données centrale regroupant des informations généralement non partagées.

Lors de l'étape d'obtention, des arbres de décision sont obtenus.

Par définition, un arbre de décision définit un ensemble de suites d'opérations à réaliser pour effectuer la maintenance du train 54.

Un arbre de décision détaille l'ensemble des étapes à mettre en œuvre par un agent de maintenance 20 pour bien analyser un dysfonctionnement.

Par le terme « analyser », il est entendu deux types de situations distinctes : d'une part, déterminer l'origine du dysfonctionnement et d'autre part, réaliser des actions physiques corrigeant le dysfonctionnement. Un arbre de décisions peut selon les cas concerner un seul de ces aspects ou les deux.

Par exemple, l'arbre de décision donne un certain nombre de mesures à effectuer et permet d'indiquer en fonction des mesures effectuées l'action adaptée pour rendre le système a nouveau fonctionnel.

En ce sens, un arbre de décision correspond à un ensemble d'opérations de maintenance.

L'obtention est mise en œuvre à partir d'au moins une partie des informations de la base de données reçue.

Par exemple, les experts 38 de la centrale de supervision 36 vont publier dans l'outil l'ensemble des documents nécessaire à la maintenance du système. Les documents peuvent être de tout type et contiennent en particulier des arbres de décision.

Selon une variante, la phase d'initialisation est mise en œuvre par numérisation de l'ensemble des ressources documentaire relatifs aux trains 54 nécessitant de la maintenance.

Selon encore une autre variante, l'arbre de décision est obtenu par mise en œuvre d'une étude statistique sur les données de la base de donnée reçue.

Par exemple, supposons que pour un type X de train, un dysfonctionnement fréquent implique dans plus de 70% des cas la mise en œuvre des mêmes actions de réparation et un protocole de test à deux étapes. L'arbre de décision comprendra alors les actions suivantes : déterminer le type de train, si le type du train est le type X, mettre en œuvre les deux étapes de test de la présence du dysfonctionnement puis mettre en œuvre les protocoles.

A partir de ce cas très simple, il est possible de déduire comment former chaque partie de l'arbre de décision.

A l'issue de la phase d'initialisation, il est ainsi obtenu une base de données et des arbres de décision que le procédé vise à optimiser.

Dans l'exemple proposé, la phase d'exploitation comprend une étape de mise à disposition, une étape de réalisation, une étape d'envoi, une étape d'actualisation, une étape de sélection, une étape d'extraction et une étape de mise à jour.

Lors de l'étape de mise à disposition, il est mis à disposition de l'agent de maintenance 20 l'ensemble des arbres de décisions ainsi que de la base de données.

Lors de l'étape de réalisation, les agents de maintenance 20 réalisent une suite d'opérations de maintenance sur le système, la suite d'opérations prenant en compte au moins une partie des arbres de décisions.

En effet, les agents de maintenance 20 accèdent à la base de données sur leur lieu d'intervention. Les agents de maintenance 20 peuvent alors pouvoir consulter les documents et arbres de décisions relatifs à leur intervention. L'accès se fait soit par la navigation dans des répertoires informatiques, soit par utilisation de la fonction de recherche.

Les agents de maintenance 20 pourront alors décider d'opter pour un arbre de décision qu'ils trouvent adapté et par exemple, l'afficher sous forme graphique.

L'arbre de décision permet à l'agent de maintenance 20 d'être guidé pas à pas.

Lors de l'étape d'envoi, il est envoyé d'au moins une information relative à la suite d'opérations réalisées.

L'étape d'envoi est aisément mise en œuvre en utilisant le terminal mobile 12 appartenant à l'agent de maintenance 20 et faisant partie de la plateforme 10.

La nature et le contenu des informations envoyées peuvent varier beaucoup d'un cas à l'autre.

Par exemple, si une opération de l'arbre de décision suivi n'est pas assez détaillée, un agent de maintenance 20 a la possibilité de demander une évolution de l'opération.

L'agent de maintenance 20 peut aussi dans un tel cas proposer de charger un contenu multimédia.

Selon un autre exemple, l'agent de maintenance 20 peut faire remonter une alarme correspondant notamment au fait que l'opération est inadaptée ou a échoué.

Du point de vue de l'agent de maintenance 20, l'ensemble de la plateforme 10 peut être utilisé comme un réseau social.

De préférence, l'agent de maintenance 20 indique quelles opérations il a effectivement réalisées pour permettre la mise en œuvre d'études statistiques.

Lors de l'étape d'actualisation, la base de données est actualisée à l'aide de l'au moins une information envoyée.

Selon un mode de réalisation simple, l'ensemble des informations envoyées est ajouté à la base de données.

Selon un mode de réalisation plus élaboré, un filtrage des informations envoyées est effectué, notamment pour éviter les incohérences ou les redites.

Un tel filtrage est, par exemple, effectué par un modérateur.

Lors de l'étape de sélection, les arbres de décisions comportant au moins une opération commune avec la suite d'opérations effectuée par l'agent de maintenance 20 sont sélectionnés.

Selon l'exemple décrit, c'est l'unité de traitement de données 26 qui effectue cette étape de sélection.

A l'issue de l'étape de sélection, des arbres de décision sélectionnés sont sélectionnés.

Lors de l'étape d'extraction, des informations relatives aux arbres de décision sélectionnés dans la base de données sont extraites.

Selon l'exemple décrit, c'est l'unité de traitement de données 26 qui effectue cette étape de sélection.

Lors de l'étape de mise à jour, l'ensemble des arbres de décision sélectionnés est mis à jour.

Pour cela, il est appliqué par l'unité de traitement de données 26 sur l'ensemble des informations extraites une technique d'apprentissage.

De multiples techniques d'apprentissage peuvent être envisagées.

Selon un exemple particulier, la technique d'apprentissage exploite une étude statistique des informations extraites.

A titre d'illustration, si une opération ne permet jamais de discriminer une panne, c'est qu'il convient de la supprimer.

Selon un autre cas, si l'opération à effectuer correspond à un cas ayant lieu dans 2% des dysfonctionnements, il sera plus avantageux de l'effectuer à la fin d'autres tests pour permettre d'accélérer la réalisation de l'arbre de décision considéré.

En résumé, l'étude statistique permet de détecter de manière automatique les endroits à améliorer dans l'arbre de décision à optimiser.

L'étude statistique permet une optimisation des arbres de décision en fonction des arbres de décision effectués par l'ensemble des agents de maintenance 20.

Une étude statistique spécifique est, par exemple, un filtrage avec un seuil. Notamment, selon un cas particulier, la règle de filtrage est que si dans telles conditions prédéfinies, plus d'un certain seuil tel 70% des cas comportent la même suite d'actions, alors cette suite est d'actions est définie comme la suite à suivre.

En complément ou en variante, une règle de filtrage est que si la même suite d'actions dans telles conditions prédéfinies est réalisée dans moins d'un certain seuil de cas, par exemple, 10%, il convient de supprimer cette option.

Selon un autre exemple particulier, la technique d'apprentissage est une technique supervisée à l'aide des superviseurs 38.

Toute combinaison des techniques d'apprentissages précédents est envisageable. En particulier, il est possible de mettre en œuvre une étude statistique et une technique d'apprentissage supervisée suivie l'une par l'autre, notamment dans le sens le plus appropriée selon l'utilisation visée. La phase d'exploitation est ensuite réitérée pour une pluralité de suites d'opérations de maintenance.

Le procédé d'analyse permet ainsi d'obtenir une base de données présentant un contenu enrichi par rapport aux bases données de l'état de la technique.

En particulier, la base de données capitalise sur les connaissances et savoirs de l'ensemble des agents de maintenance 20. Cela vaut à la fois pour les cas de rotation des équipes d'agent de maintenance 20 sur un même système mais aussi en cas de départ d'un agent de l'équipe de maintenance.

Les agents de maintenance 20 peuvent ainsi participer à l'amélioration en continu de la base de données.

L'amélioration de la base de données provient également de l'emploi de la technique d'apprentissage qui peut être appliquée à une grande quantité de données, la grande quantité de données assurant une bonne efficacité de la mise en œuvre de la technique d'apprentissage.

La base de données s'enrichit aussi du fait que le superviseur 38 ou l'expert 38 se trouve en contact direct avec le terrain et ce, sur de multiples lieux d'intervention. Cela permet que l'expert 38 prenne position sur des problématiques des agents de maintenance 20 sans se déplacer mais surtout, cela lui permet de traiter chaque problème remonté à lui.

La base de données permet également d'accéder à l'historique des données relatives à l'arbre de décision considéré.

Il convient de noter que la base de données présente pour un agent de maintenance 20 l'avantage de centraliser l'ensemble des informations précitées en un seul endroit, et surtout à l'expertise des superviseurs 38 mais aussi à l'expertise capitalisée par l'expérience des autres agents de maintenance 20.

Cette centralisation est d'autant plus avantageuse si les informations sont l'ensemble des informations provenant de différents sites, tel le centre de maintenance 42, le centre de réparation 44 et les trois centrales 46, 48 et 50 appartenant chacune à un fournisseur respectif du centre de réparation 44.

En outre, le déploiement du procédé sur une plateforme 10 en nuage facilite l'accès pour l'agent puisqu'il suffit d'être muni d'un terminal mobile 12 pour accéder à l'ensemble des informations de la base de données.

Du fait de la facilité d'accès de la base de données, les pertes de temps des agents pour accéder aux informations pertinentes sont fortement réduites.

Cela résulte en une résolution efficace du dysfonctionnement considéré. En particulier, cela évite aux agents de trouver démunis face à des pannes du système.

Le procédé permet également de s'assurer que les opérations de maintenance sont réalisées par les agents de maintenance 20 dans les conditions de sécurités adaptées pour le système et garantissant l'intégrité des agents. Le contrôle des activités de maintenance des agents est plus aisé.

Le procédé peut s'appliquer pour tout système quel que soit sa complexité. Par exemple, aucune limitation sur le nombre d'équipements n'est impliquée.

Le procédé permet aussi de prendre en compte la complexité croissante des systèmes ainsi que leur évolution rapide. En effet, l'actualisation de la base de données et la mise à jour des arbres de décision peuvent être mises en œuvre en temps réel.

Le procédé gère en particulier le cas de changement du système à maintenir.

Enfin, il est à noter que le procédé fonctionne aussi même lorsque la documentation relative à la maintenance des équipements du système n'est soit pas assez pertinente ou soit inexistante.

Cela permet que, pour des modes d'erreur non envisagés lors de la rédaction de la documentation initiale, le procédé permet de générer les arbres de décision adaptés de manière très rapide.

De manière synthétique, le procédé d'analyse des dysfonctionnements d'un système est donc de mise en œuvre plus aisée.

Selon un mode de réalisation particulier, la phase d'exploitation comporte, en outre, une étape de demande par l'agent d'informations qui se rapportent à un arbre de décision comportant au moins une opération de maintenance commune avec la suite d'opérations de maintenance à effectuer.

La phase d'exploitation comporte également une étape de restitution des informations demandées à l'agent sur un terminal mobile 12.

La restitution peut prendre plusieurs formes. A titre d'exemple, trois formes sont développées dans ce qui suit.

Par exemple, les informations restituées lors de l'étape de restitution sont des informations qui sont contenues dans la base de données et qui comportent au moins un élément choisi dans la liste constitué d'une image, d'une vidéo ou d'un commentaire provenant d'au moins un agent ayant effectué la même suite d'opérations.

Selon un autre exemple, les informations restituées lors de l'étape de restitution comportent l'affichage sur le terminal mobile 12 d'une suite d'opérations de maintenance à effectuer en réalité virtuelle.

L'emploi de la réalité virtuelle permet de mieux guider l'agent dans des interventions délicates.

En outre, ce guidage peut être fait à distance, ce qui permet de mettre en relation l'agent de maintenance 20 et un superviseur 38.

Selon encore un autre exemple, les informations restituées lors de l'étape de restitution sont restituées à l'aide d'une technique de réalité augmentée.

Par exemple, si l'agent de maintenance 20 hésite entre deux pièces à démonter, le terminal mobile 12 peut afficher des signaux lumineux signalant la pièce à démonter.

Avantageusement, la réalité augmentée est utilisée comme support à distance des équipes de maintenance par des experts 38.

Cela permet en outre de capitaliser directement l'expérience acquise par l'ajout des données par l'expert 38 dans la base de données.

Les formes décrites précédemment à titre d'exemple peuvent être utilisées cumulativement lors de la même étape de restitution.

Selon une variante, l'étape d'actualisation comporte un traitement par un superviseur 38 des informations envoyées pour obtenir des informations traitées et un ajout des informations traitées à la base de données.

Selon un mode de réalisation, en supposant que l'agent de maintenance 20 n'a pas le temps de finaliser l'ensemble de la suite d'opérations à effectuer, l'agent a la possibilité de sauvegarder son travail et de fournir l'ensemble des informations qu'il juge nécessaire pour qu'une nouvelle équipe puisse continuer la suite d'opérations.

Dans un tel cas, le procédé sert également d'outil de communications entre les agents de maintenance 20.

Le présent procédé a été présenté pour le cadre spécifique d'une utilisation pour la maintenance de trains 52.

Toutefois, le procédé s'applique également pour la maintenance d'autres équipements comme par exemple un navire ou des électroménagers d'une cuisine pourvu que l'équipement soit amené à être utilisé dans une pluralité d'installations. A titre d'exemple, dans le cas du navire, les installations sont le chantier de construction, le centre de maintenance et l'entrepôt du fournisseur de pièces de réparation tandis que, pour la cuisine, les installations sont l'habitat contenant la cuisine et les différents entrepôts des fournisseurs de chaque électroménager.

Selon une variante, toute combinaison des modes de réalisations précités peut être envisagée.

## Revendications

1. Procédé d'analyse des dysfonctionnements d'un système, le procédé comportant :
- une phase d'initialisation comprenant une étape de :
- réception d'informations relatives à la maintenance du système, pour former une base de données, et
- obtention d'arbres de décision à partir d'au moins une partie des informations de la base de données reçue, un arbre de décision définissant un ensemble de suites d'opérations de maintenance à réaliser pour effectuer la maintenance du système, les arbres de décision comprenant une indication d'un ensemble de mesures à effectuer sur le système et d'une action adaptée pour rendre le système à nouveau fonctionnel en fonction des mesures effectuées, et
- une phase d'exploitation comportant une étape de :
- mise à disposition d'un agent de maintenance de l'ensemble des arbres de décisions ainsi que de la base de données,
- réalisation par l'agent de maintenance d'une suite d'opérations de maintenance sur le système en fonction d'au moins une partie des arbres de décisions,
- envoi d'au moins une information relative à la suite d'opérations de maintenance réalisées,
- actualisation de la base de données à l'aide de l'au moins une information envoyée,
- sélection des arbres de décisions comportant au moins une opération de maintenance commune avec la suite d'opérations effectuée par l'agent de maintenance, pour obtenir des arbres de décision sélectionnés,
- extraction des informations relatives aux arbres de décision sélectionnés dans la base de données, et
- mise à jour de l'ensemble des arbres de décision sélectionnés par application d'une technique d'apprentissage appliquée sur l'ensemble des informations extraites, la mise à jour étant effectuée par une unité de traitement de données (26) d'une plateforme informatique (10), la technique d'apprentissage utilisée étant une étude statistique suivie d'une technique d'apprentissage supervisée ou une technique d'apprentissage suivie d'une étude statistique, l'étude statistique étant un ensemble d'au moins deux filtrages avec un seuil respectif,
la phase d'exploitation étant réitérée pour une pluralité de suites d'opérations de maintenance.

2. Procédé selon la revendication 1, dans lequel la phase d'exploitation comporte, en outre, une étape de :
- demande par l'agent de maintenance d'informations qui se rapportent à des arbres de décisions comportant au moins une opération de maintenance commune avec la suite d'opérations de maintenance à effectuer, et
- restitution des informations demandées à l'agent de maintenance sur un terminal mobile (12).

3. Procédé selon la revendication 2, dans lequel les informations restituées lors de l'étape de restitution sont des informations qui sont contenues dans la base de données et qui comportent au moins un élément choisi dans la liste constitué d'une image, d'une vidéo ou d'un commentaire provenant d'au moins un agent de maintenance ayant effectué la même suite d'opérations de maintenance.

4. Procédé selon la revendication 2 ou 3, dans lequel les informations restituées lors de l'étape de restitution comportent l'affichage sur le terminal mobile (12) d'une suite d'opérations de maintenance à effectuer en réalité virtuelle.

5. Procédé selon l'une quelconque des revendications 2 à 4, dans lequel les informations restituées lors de l'étape de restitution sont restituées à l'aide d'une technique de réalité augmentée.

6. Procédé selon l'une quelconque des revendications 1 à 5, dans lequel l'étape d'actualisation comporte un traitement par un superviseur (38) des informations envoyées pour obtenir des informations traitées et un ajout des informations traitées à la base de données.

7. Produit programme d'ordinateur comportant un support lisible d'informations, sur lequel est mémorisé un programme d'ordinateur comprenant des instructions de programme, le programme d'ordinateur étant chargeable sur une unité de traitement de données (26) et adapté pour entraîner la mise en œuvre d'au moins l'étape de mise à jour du procédé selon l'une quelconque des revendications 1 à 6 lorsque le programme d'ordinateur est mis en œuvre sur l'unité de traitement des données (26).

8. Support lisible d'informations sur lequel est mémorisé un produit programme d'ordinateur selon la revendication 7.

9. Plateforme informatique (10) propre à mettre en œuvre certaines étapes du procédé selon l'une quelconque des revendications 1 à 6, la plateforme comportant :
- un ensemble de terminaux mobiles (12), les terminaux mobiles (12) étant utilisés lors de l'étape d'envoi du procédé, et
- une unité de traitement de données (26) adaptée pour entraîner la mise en œuvre d'au moins l'étape de mise à jour du procédé lorsqu'est mis en œuvre sur l'unité de traitement des données un programme d'ordinateur chargé sur l'unité de traitement de données et comprenant des instructions de programme mémorisées sur un support lisible d'informations d'un produit programme d'ordinateur,
la plateforme informatique (10) étant une plateforme en nuage.

## Patentansprüche

1. Verfahren zur Analyse von Funktionsstörungen eines Systems, das Verfahren umfassend:
- eine Initialisierungsphase, umfassend einen folgenden Schritt:
- Empfangen von Informationen über die Wartung des Systems, um eine Datenbank zu bilden, und
- Erhalten von Entscheidungsbäumen anhand mindestens eines Teils der Informationen der empfangenen Datenbank, wobei ein Entscheidungsbaum einen Satz von Abfolgen von Wartungsoperationen definiert, die durchzuführen sind, um die Wartung des Systems zu bewirken, die Entscheidungsbäume umfassend eine Angabe eines Satzes von Messungen, die an dem System durchzuführen sind, und einer geeigneten Aktion, um das System abhängig von den durchgeführten Messungen wieder funktionsfähig zu machen, und
- eine Betriebsphase, umfassend mindestens die folgenden Schritte:
- Bereitstellen der gesamten Entscheidungsbäume sowie der Datenbank für einen Wartungsmitarbeiter,
- Durchführen einer Folge von Wartungsarbeiten an dem System durch den Wartungsmitarbeiter abhängig von mindestens einem Teil der Entscheidungsbäume,
- Senden von mindestens einer Information in Bezug auf die Folge von durchgeführten Wartungsarbeiten,
- Aktualisieren der Datenbank mittels der mindestens eine gesendete Information,
- Auswählen der Entscheidungsbäume, umfassend mindestens einen Wartungsvorgang, der mit der von dem Wartungsmitarbeiter durchgeführten Abfolge von Vorgängen gemeinsam ist, um ausgewählte Entscheidungsbäume zu erlangen,
- Extrahieren von Informationen über die ausgewählten Entscheidungsbäume aus der Datenbank, und
- Aktualisieren des Satzes von ausgewählten Entscheidungsbäumen durch Anwenden einer Lerntechnik, die auf den Satz von extrahierten Informationen angewendet wird, wobei die Aktualisierung durch eine Datenverarbeitungseinheit (26) einer Computerplattform (10) durchgeführt wird, wobei die verwendete Lerntechnik eine statistische Studie gefolgt von einer überwachten Lerntechnik oder eine Lerntechnik gefolgt von einer statistischen Studie ist, wobei die statistische Studie ein Satz von mindestens zwei Filterungen mit einem jeweiligen Schwellenwert ist,
wobei die Betriebsphase für eine Vielzahl von Folgen von Wartungsarbeiten wiederholt wird.

2. Verfahren nach Anspruch 1, wobei das Verfahren ferner einen folgenden Schritt umfasst:
- Abfragen, durch den Wartungsmitarbeiter, von Informationen, die sich auf Entscheidungsbäume beziehen, die mindestens einen Wartungsvorgang umfassen, der mit der auszuführenden Wartungsfolge gemeinsam ist, und
- Rückgeben der angeforderten Informationen an den Wartungsmitarbeiter auf einem mobilen Endgerät (12).

3. Verfahren nach Anspruch 2, wobei die in dem Wiedergabeschritt wiedergegebenen Informationen sind, die in der Datenbank enthalten sind und die mindestens ein Element aus der Liste enthalten, die aus einem Bild, einem Video oder einem Kommentar besteht, das von mindestens einem Wartungsmitarbeiter stammt, der die gleiche Abfolge von Wartungsarbeiten durchgeführt hat.

4. Verfahren nach Anspruch 2 oder 3, wobei die in dem Wiedergabeschritt wiedergegebenen Informationen die Anzeige einer Abfolge von Wartungsarbeiten, die in virtueller Realität durchzuführen sind, auf dem mobilen Endgerät (12) umfassen.

5. Verfahren nach einem der Ansprüche 2 bis 4, wobei die in dem Wiedergabeschritt wiedergegebenen Informationen mittels einer Technik der erweiterten Realität wiedergegeben werden.

6. Verfahren nach einem der Ansprüche 1 bis 5, wobei der Aktualisierungsschritt eine Verarbeitung der gesendeten Informationen durch einen Supervisor (38), um verarbeitete Informationen zu erlangen, und ein Hinzufügen der verarbeiteten Informationen zu der Datenbank umfasst.

7. Computerprogrammprodukt, umfassend einen lesbaren Informationsträger, auf dem ein Computerprogramm umfassend Programmanweisungen gespeichert ist, wobei das Computerprogramm auf eine Datenverarbeitungseinheit (26) geladen werden kann und angepasst ist, um die Durchführung mindestens des Aktualisierungsschritts des Verfahrens einem der Ansprüche 1 bis 6 zu bewirken, wenn das Computerprogramm auf der Datenverarbeitungseinheit (26) durchgeführt wird.

8. Lesbarer Informationsträger, auf dem ein Computerprogrammprodukt nach Anspruch 7 gespeichert ist.

9. Computerplattform (10), die geeignet ist, um bestimmte Schritte des Verfahrens einem der Ansprüche 1 bis 6 durchzuführen, die Plattform umfassend:
- einen Satz von mobilen Endgeräten (12), wobei die mobilen Endgeräte (12) während des Schritts eines Sendens des Verfahrens verwendet werden, und
- eine Datenverarbeitungseinheit (26), die angepasst ist, um die Durchführung zumindest des Aktualisierungsschritts des Verfahrens zu bewirken, wenn auf der Datenverarbeitungseinheit ein Computerprogramm ausgeführt wird, das auf die Datenverarbeitungseinheit geladen ist und Programmanweisungen umfasst, die auf einem lesbaren Informationsträger eines Computerprogrammprodukts gespeichert sind,
wobei die Computerplattform (10) eine Cloud-Plattform ist.

## Claims

1. A method for analyzing the malfunctions of a system, the method comprising:
- an initialization phase comprising a step of:
- receiving information relating to the maintenance of the system, to form a database, and
- obtaining decision trees from at least part of the information in the database received, a decision tree defining a set of maintenance operations sequences to be performed to maintain the system, the decision trees comprising a set of measurements to be achieved on the system and an action adapted to render the system operative again in function of the achieved measurements, and
- an operating phase comprising the following steps:
- providing a maintenance agent with a set of decision trees as well as a database,
- performing by the maintenance agent of a sequence of maintenance operations on the system according to at least part of the decision trees,
- sending at least one piece of information relating to the sequence of maintenance operations performed,
- updating the database using at least one piece of the information sent,
- selecting decision trees including at least one common maintenance operation with the sequence of operations performed by the maintenance agent, to obtain selected decision trees,
- extracting the information related to the selected decision trees from the database, and
- updating the set of selected decision trees by applying a learning technique applied to the information sent, the updating being carried out by a data processing unit (26) of a computer platform (10), the learning technique used being a statistical study followed by a supervised learning technique or a learning technique followed by a statistical study, the statistical study being a set of at least two filterings with a respective threshold,
the operating phase being repeated for a plurality of maintenance operations sequences.

2. The method according to claim 1, wherein the operating phase additionally includes a step of:
- requesting by the maintenance agent information relating to decision trees comprising at least one maintenance operation common to the sequence of maintenance operations to be performed, and
- returning the information requested from the maintenance agent on a mobile terminal (12).

3. The method according to claim 2, wherein the information returned during the return step is information that is contained in the database and which includes at least one element chosen from the list consisting of an image, a video or a comment from at least one maintenance agent that has performed the same sequence of maintenance operations.

4. The method according to claim 2 or 3, wherein the information returned during the return step includes the display on the mobile terminal (12) of a sequence of maintenance operations to be performed in virtual reality.

5. The method according to any one of claims 2 to 4, wherein the information returned during the return step is returned using an enhanced reality technique.

6. The method according to any one of claims 1 to 5, wherein the updating step comprises processing by a supervisor (38) of the information sent, to obtain processed information and adding the processed information to the database.

7. A computer program product comprising an information readable medium on which is stored a computer program including program instructions, the computer program being loadable onto a data processing unit (26) and adapted to cause at least the step of updating the method according to any one of claims 1 to 6 to be performed when the computer program is implemented on the data processing unit (26).

8. A readable information medium on which a computer program product according to claim 7 is stored.

9. A computer platform (10) adapted to carrying out steps of the method according to any of claims 1 to 6, the platform comprising:
- a set of mobile terminals (12), the mobile terminals (12) being used during the sending step of the method, and
- a data processing unit (26) adapted to cause the implementation of at least the updating step of the method when a computer program loaded on the data processing unit is implemented on the data processing unit and comprising program instructions stored on a readable information medium of a computer program product,
the computing platform (10) being a cloud platform.
